# EUROPEAN PATENT SPECIFICATION

(11) **EP 2 072 679 B1**
(45) Date of publication and mention of the grant of the patent: **27.04.2011**
(21) Application number: 08170503.0
(22) Date of filing: 02.12.2008
(51) Int. Cl.: D21G 1/02, F16C 13/00

(54) **Roll**
Walze
Rouleau

(30) Priority: 20.12.2007 FI 20075940
(43) Date of publication of application: 24.06.2009
(73) Proprietor: Metso Paper, Inc., 00130 Helsinki (FI)
(72) Inventor: Hakola, Jani, 04460 Nummenkylä (FI); Suomi, Eero, 13210 Hämeenlinna (FI)
(74) Representative: TBK-Patent

(56) References cited:
- DE-A1-102004 045 407
- JP-A- 7 214 122
- JP-A- 10 058 048
- US-A- 3 457 617

## Description

### FIELD OF INVENTION

The invention relates to a roll according to the preamble of claim 1, which is known from JP-A-10058048.

### PRIOR ART

In web-manufacturing machines, there is a great number of rolls which deflect from the effect of load. The deflection impedes the operation of the machine and, thus, one tries to decrease it. The deflection becomes the greater problem the wider the machine is i.e. the longer the roll becomes. A possibility to decrease the deflection is to extend the diameter of the roll, whereby the roll becomes stiffer. However, extending the roll diameter increases the manufacturing costs of the roll and, at many sites, extending the roll diameter is not possible on the grounds of space.

For example in belt calenders, such as metal-belt calenders, the process prerequisites the metal belt high tension 100-150 kN/m and in some positions high endurance of nip load 100 kN/m. When such a roll of a belt calender, such as a belt guide roll or a thermo roll, deflects, a difficulty is the decrease of belt tension in the middle of the roll. For example, the deflection of the belt guide roll of the belt calender from the middle due to the loading of the belt means that the metal belt is tight on the edges and loose from the middle, whereby pressure in the grid nip is uneven. The deflection cannot be compensated with crowning, because then the metal belt slides on top of the belt guide roll. The sliding of the metal belt on the surface of the belt guide roll wears the thin metal belt, whereby its lifetime will be shortened. It has been possible to increase the roll rigidity generally even up to the machine width of about 6 metres by enlarging the roll diameter, but after this the roll has to be made more rigid in some other way.

FI publication print 50002 describes a roll in which there are an outer shell and a hollow or closed inner shaft. In the inner shaft, there is a middle part the outer diameter of which is larger than the outer diameter of the other parts of the inner shaft and the outer shell is combined by shrinking to the middle part of the inner shaft. The outer shell consists of two tubes which have an inner end and an outer end. The inner diameter of the tubes is larger at the point of the inner ends of the tubes compared to the other part of the tube, whereby the wall thickness of the tubes is thinner at the point of the inner ends of the tubes. The larger inner diameter of the inner ends of the tubes is equal to the outer diameter of the middle part of the inner shaft and the totalled length of the sections having a larger inner diameter of the inner ends in the axial direction is equal to the length of the middle part having a larger outer diameter of the inner shaft in the axial direction. The inner ends of the tubes are welded together so that the middle part of the inner shaft is compressed between the shoulders of the thinned part of the outer shell. In this arrangement, the inner shaft and the outer shell are thus fixedly together. This structure aims at decreasing the deflection of the roll i.e. the roll is made stiffer.

WO specification 01/83884 describes a belt calender in which a metal belt is arranged as an endless loop by means of guide rolls. The metal belt is further arranged to pass through a calendering nip between a loading roll and a counter roll. The counter roll can be a thermo roll or a polymer roll. The loading roll can be a shoe roll or a roll with a hard surface, whereby against the outer shell of the hard-surfaced roll there is a compressible belt in the nip.

From prior art is also known a roll which comprises a shaft which consists of a cylindrical crowned middle part and an end part at both ends of the middle part via which the shaft is rotatably bearing-mounted in end bearings. On top of the middle part of the shaft is fitted a shell which rotates along the shaft. Centre-supported rolls are broadly used in the forming section of a fibrous-web machine as wire guide rolls. Such applications employ conventional spreader rolls or crowned rolls, but also such centre-supported rolls which do not cause a speed difference between the wire and the roll shell. In the former, load caused by the wire in the roll is low, in the range of 5 kN/m, whereby it is a question of a totally different structure of a centre-supported roll of its load endurance. The roll of the former is not intended for high temperatures, the operating temperature being about 60°C, whereby the temperature and pressure endurances of the roll sealing are low. The sealing of the centre-supported wire guide roll of the former can have been made of rubber.

Known arrangements have not described a reliable joining way by which the mutual rotation of the inner shaft and the outer shell of the deflection-compensated roll is prevented. The inner shaft and the outer shell should be easily assembled and detached from each other.

### SUMMARY OF INVENTION

The object of the present invention is a roll in which a joint between an inner shaft and an outer shell is implemented in a simple way for preventing their rotation in relation to each other.

The characteristic features of the roll according to the invention are presented in the characterising part of claim 1.

In the roll according to the invention, there is a shaft which consists of a cylindrical middle part and shaft journals at the ends of the middle part. The shaft is rotatably supported from its shaft journals to end bearings. Around the middle part of the shaft is fitted a shell which rotates along the shaft. The middle part of the shaft comprises at least one pressure volume to be pressurised with pressure medium, whereby the part of the outer surface of the middle part being outside the pressure volume in the direction of the shaft radius determines a peripheral joint surface. When said at least one pressure volume is pressurised, the middle part of the shaft expands in the joint surface area in the direction of the shaft radius to form a non-rotatable joint between the shaft and the shell.

Since the middle part of the shaft is additionally crowned, the roll according to the invention becomes deflection-compensated as a result of the crowning. In an externally unloaded situation of the roll, the inner surface of the shell is fast on the outer surface of the middle part of the shaft at the centre of the middle part, but at the ends of the middle part there is a small gap between the inner surface of the shell and the outer surface of the middle part of the shaft. When the roll shell is loaded externally e.g. by another roll, the middle part of the shaft starts to deflect from the centre and, at certain load, the deflection is of such quantity that the inner surface of the outer shell comes for the whole travel fast on the outer surface of the middle part of the shaft, whereby the outer surface of the shell is straight at the load point. The crowning of the roll can be dimensioned such that the outer surface of the shell becomes straight in desired load conditions.

An installation clearance between the inner shaft and the outer shell of the roll according to the invention enables the easy assembly of the roll and detachment of the parts from each other. For the joint between the shaft and the shell, no strict manufacturing tolerances or awkward manipulations are required.

The roll according to the invention can be particularly well applied as a heated or non-heated belt guide roll and thermo roll, which are deflection-compensated rolls, in the belt calender of a fibrous-web machine.

The invention will next be described by referring to the enclosed figures shown by way of examples, without limiting the invention solely to what is shown in the figures.

### BRIEF DESCRIPTION OF FIGURES

Fig. 1 shows a roll according to the invention.
Fig. 2 shows the roll according to Fig. 1 when loaded.
Fig. 3 shows a detail A of Fig. 1.
Fig. 4 shows a belt calender in which the roll according to the invention can be used in different positions.

### DESCRIPTION OF ADVANTAGEOUS EMBODIMENTS

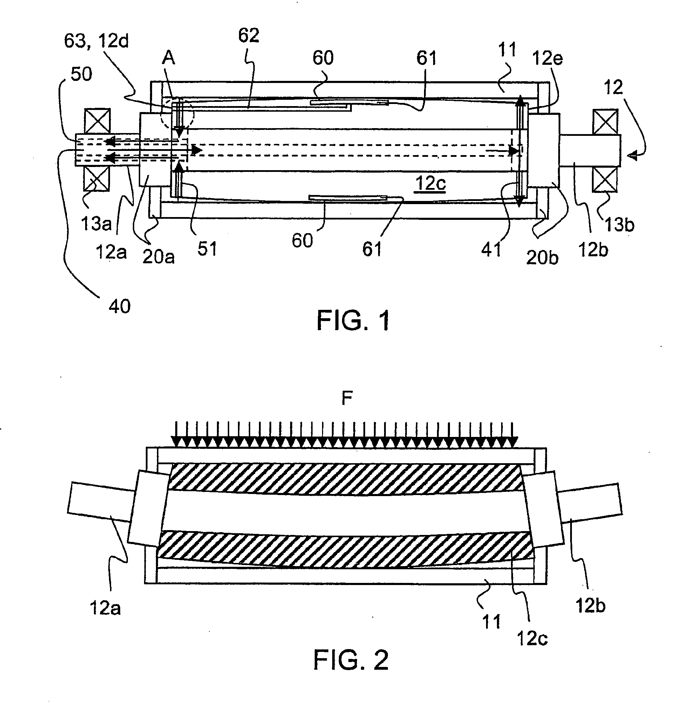

Figs. 1 and 2 show a roll according to the invention generally consisting of two main components. The roll comprises an inner shaft 12 which consists of a cylindrical middle part 12c and of end parts 12a, 12b at both ends of the middle part 12c. The middle part 12c of the shaft 12 is advantageously crowned. The end parts 12a, 12b operating as shaft journals are bearing-mounted in end bearings 13a, 13b. On top of the middle part 12c of the shaft 12 is fitted an external cylindrical shell 11 which is sealed from its both ends by means of end pieces 20a, 20b to ends 12d, 12e or shaft journals 12a, 12b of the middle part 12c of the shaft 12. The sealing has been advantageously implemented to endure the high temperatures of the roll and to endure the pressure of heat-transfer medium or lubricant. Each end piece 20a, 20b is thus fitted around the shaft journal 12a, 12b so that the sealing allows a small radial movement. The magnitude of the radial movement is determined by a difference between the outer diameter of the end of the middle part 12c and the inner diameter of the end of the shell 11. Said diameter difference can be e.g. 20 mm, the difference between the radiuses then being in the range of 10 mm, when the inner diameter of the end of the shell 11 is 1,170 mm and the outer diameter of the end of the middle part 12c of the shaft is 1,150 mm. The end pieces 20a, 20b move or yield along the shell 11 slightly radially in relation to the shaft journals 12a, 12b in a situation in which an outside load F is exerted on the shell 11. Between the shell 11 and the shaft 12, there can be located a liquid volume which can be used e.g. for heating the roll.

Joining the components for preventing their rotation in relation to each other facilitates the balancing of the roll and the sealing of the volume between the shaft and the shell. Characteristics increasing the construction costs would be related to joining with shrink joints or various wedge joints, because there might then occur stricter tolerances and difficulties when handling the pieces, inter alia, hot pieces. Such difficulties can be avoided by implementing the non-rotatable joint between the shaft and the shell in a way described as follows.

In the roll according to the invention, a joint zone is manufactured between the shaft and the shell so that the middle part 12c of the shaft 12 comprises at least one pressure volume 61 to be pressurised with pressure medium, whereby the part of the outer surface of the middle part 12c, which is outside the pressure volume 61 in the direction of the radius of the shaft 12, determines a peripheral joint surface 60, whereby said at least one pressure volume 61 when pressurising the middle part 12c expands from the area of the joint surface 60 in the direction of the radius of the shaft 12 to form a non-rotatable joint between the shaft 12 and the shell 11.

The joint surface 60 can be manufactured e.g. by turning a groove in the shaft 12 and after that by welding at least one segment on top of the groove which segment forms the peripheral joint surface 60 which is part of the outer surface of the middle part 12c. The groove width in the axial direction of the middle part 12c can be in the range of about 1 metre in rolls used in recent wide fibrous-web machines. The groove is for its length in the peripheral direction of the middle part 12c advantageously extending over the whole periphery of the middle part 12c, but the groove can also extend only for part of the peripheral length. Naturally, there can be in the direction of the periphery of the middle part 12c successively or side by side at least one peripheral groove and, in the axial direction of the middle part, there can be at least one peripheral groove which forms part of the pressure volume 61. Then, between the inner surface of the material of the joint surface 60 and the bottom of the manufactured groove is advantageously arranged the peripheral pressure volume 61 expandable with pressure medium the height of which in the direction of the radius of the roll 12 is advantageously 0.5-1 mm. The small height of the pressure volume 61 is advantageous compared to a bigger one, because the fatigue of the material forming the joint surface 60 is smaller if the moving of the joint surface 60 is restricted to be minor.

Advantageously, the shaft 12 comprises at least one pressure channel 62 which forms a flow connection between the expanding pressure volume 61 and a pressure control element 63. The pressure channel 62 is composed e.g. of borings which are advantageously joined to the end surface 12d or 12e of the middle part 12c of the shaft 12.

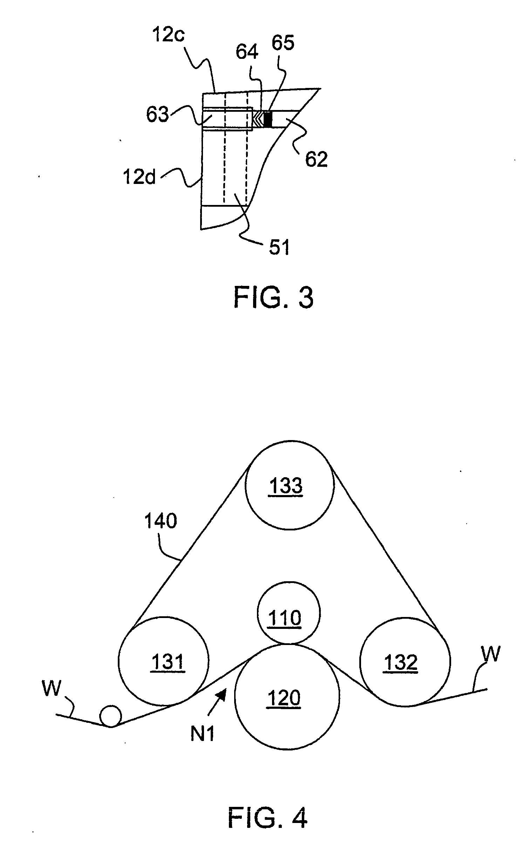

Fig. 3 illustrates with an enlarged detail A how the roll advantageously comprises the pressure control element 63, such as a pressurising screw, which is in a flow connection with the pressure volume 61 and advantageously arranged to be used from the end surface 12d, 12e of the middle part 12c of the shaft 12. The pressurisation of the pressure volume 61 can be arranged by driving the pressure control element 63 to predetermined torque, whereby the pressure medium in the pressure volume 61 is correspondingly brought to a predetermined pressurised state. With the pressure control element 63, it is possible to use e.g. a spring-like element 64, such as diaphragm springs, combined with a seal 65 which is arranged to be moved pressure-sealingly e.g. in the pressure channel 62. This minimises leaks.

It is possible to use oil or water or grease or air or a combination of at least two above-mentioned pressure media as the pressure medium.

In connection with the assembly (or disassembly) of the roll, the pressure volume 61 of the joint zone is kept in a non-pressurised state, whereby the outer diameter of the middle part 12c in the area of the joint area 60 is smaller than the inner diameter of the shell 11. This enables a required clearance between the joint surfaces. When the shell 11 has been accurately positioned in relation to the middle part 12c, the pressure volume 61 is pressurised, whereby the joint surface 60 presses against the shell 11 and a non-sliding friction joint is created. After this, the pressure control element 63 is locked and the roll is able to proceed to the final assembly.

When the pressurisation of the pressure volume 61 is released, the outer diameter of the middle part 12c in the joint area 60 reduces to be smaller than the inner diameter of the shell 11.

Fig. 1 shows an oil channel arrangement 40, 41, 50, 51 of the shaft 12, by means of which oil can be guided to a space between the middle part 12c of the shaft 12 and the shell 11 and away from it. Through the first shaft journal 12a of the shaft 12 is formed a first channel 40 which axially extends to a distance from the second end piece 20b where it diverges into several radial channels 41. These radial channels 41 open to a space between the middle part 12c of the shaft 12 and the shell 11. Through the first shaft journal 12a of the shaft 12 is further formed a second channel 50 which surrounds the first channel 40 and which axially extends inside the first end piece 20a at the point of the first shaft journal 12a where it diverges into radial channels 51. Also these radial channels 51 open to the space between the middle part 12c of the shaft 12 and the shell 11. Along the first channel 40, it is possible to feed oil into the space between the middle part 12c of the shaft 12 and the shell 11 close to the second end piece 20b from which the oil is guided along grooves on the outer surface of the middle part 12c of the shaft 12 towards the first end piece 20a from which it is guided out of the roll along the second channel 50. The first channel 40 can consist of a tube. Instead of straight or spiral-like grooves formed on the outer surface of the middle part 12c of the shaft 12, it is possible to provide the outer surface of the middle part 12c of the shaft 12 with straight or spiral-like bronze strips. Between the bronze strips, grooves or channels for oil are then formed. The crowning of the middle part 12c of the shaft 12 can then be implemented with machining the bronze strips.

Fig. 2 shows how the roll according to the invention becomes deflection-compensated as a result of the crowning of the middle part 12c of the shaft 12 and the outer surface of the shell 11 becomes straight in desired load conditions F. In an externally unloaded situation, the inner surface of the shell 11 is fast on the outer surface of the middle part 12c of the shaft 12 at the centre of the middle part 12c, but at the ends of the middle part 12c there is a small gap between the inner surface of the shell 11 and the outer surface of the middle part 12c of the shaft. When the roll shell 11 is loaded externally e.g. by another roll, the middle part 12c of the shaft 12 starts to deflect from the centre and, at certain load, the deflection is of such quantity that the inner surface of the outer shell 11 comes for the whole travel fast on the outer surface of the middle part 12c of the shaft 12, whereby the outer surface of the shell 11 is straight at the load point. The crowning of the roll can be dimensioned so that the outer surface of the shell 11 becomes straight in desired load conditions F whereby, when using a roll according to the invention as the belt guide roll or thermo roll of a belt calender, a straight belt tension profile is provided.

The roll illustrated in Fig. 1 can be used as a thermo roll in a calender. By means of the channel arrangement formed in the inner shaft and the grooves on the outer surface of the middle part of the inner shaft, the circulation of heat-transfer medium, such as oil, can be arranged in the roll. As the heat-transfer medium, it is possible to use fluids utilised as heat-transfer medium and the heat-transfer medium can be enhanced with nanoparticles for improving the lubrication power of the inner boundary lubrication situation of the roll. By using hot heat-transfer medium, the shell of the thermo roll can be heated to a desired temperature. The arrangement according to the invention is not limited solely to the thermo roll but it can be used in a non-heatable roll, whereby the channel arrangement is not required for heating but, with the channel arrangement, it is possible to provide for the lubrication between the outer surface of the middle part 12c and the inner surface of the shell 11.

Fig. 4 shows a belt calender in which the roll according to the invention can be used in different positions. The applicant markets the belt calender shown in the figure by the registered trademark ValZone. The belt calender comprises a metal belt loop 140 which is guided by guide rolls 131, 132, 133. The metal belt 140 circulates a first thermo roll 120 being outside the metal belt loop and forms an extended calendering nip N1 with the first thermo roll 120. The two lowest guide rolls 131, 132 of the metal belt loop 140 are also advantageously thermo rolls by which the metal belt 140 is heated. If desired, a thermo roll can be arranged as the topmost belt guide roll 133. Inside the metal belt loop 140, a deflection-compensated Sym roll 110 is fitted by which the metal belt 140 is loaded against the thermo roll 120. The web W passes between the outer shell of the first thermo roll 120 and the metal belt 140. With such an arrangement is provided an extremely long calendering zone N1, advantageously about one metre long in the machine direction. Due to long dwell time, high temperature, extensive predamping and low nip pressure, the web W becomes plasticised, whereby good smoothness and printability are formed to the web W. Also the flexural rigidity and bulk of the web W remain good. The calendering effect is simultaneously exerted on both surfaces of the web W, due to the hot metal belt 140 on one side of the web W and the hot thermo roll 120 on the opposite side of the web W. The calendering zone N1 is divided into three steps i.e. a pre-processing step, a compression step and a finishing step. Heat transfer in the web W is here very efficient, whereby the web W can be pre-damped to dampness greater than normal before the calender.

In the belt calender according to Fig. 4, the roll according to the invention can be used as the first thermo roll 120 or as the guide roll 131, 132, 133 of the metal belt 140 of the belt calender which can be heated. The roll according to the invention can naturally be used in different kinds of belt calenders or in normal calenders, presses, sizers, reelers in corresponding positions.

The temperature of the first thermo roll 120 of the belt calender and the metal belt 140 shown in Fig. 4 can be kept in the range of 150-200 degrees Celsius due to the long dwell time.

The roll according to the invention can also be used in a press as the second roll of a press nip.

The middle part 12c of the shaft 12 of the roll according to the invention can be hollow or closed.

In the roll according to the invention, small sliding occurs between the outer surface of the middle part of the shaft and the inner surface of the shell but this is not a great problem. The middle part of the shaft and the shell endure such abrasion well without any great problem arising from it. In a situation in which the roll according to the invention is used as a thermo roll, lubricating heat-transfer medium, such as heating oil, passing between the outer surface of the middle part of the shaft and the inner surface of the shell simultaneously lubricates the surfaces so that the wear of the surfaces remains small. In a situation in which the roll according to the invention is not a thermo roll, it is possible to arrange suitable lubrication between the outer surface of the middle part of the shaft and the inner surface of the shell for decreasing the wear of the surfaces.

The roll according to the invention is advantageously manufactured so that the shaft is of cast iron, advantageously of ductile iron, and the shell is of structural steel which is advantageously spray-covered from the outer surface and advantageously nitrated from the inner surface. The metal belt of the belt calender is advantageously of thin, 0.6-1.2 mm thick steel material which endures tensile stress well and the surface properties of which correspond the surface properties of the thermo roll.

## Claims

1. A roll comprising
a shaft (12), which is formed of a cylindrical middle part (12c) and an end part (12a, 12b) at each end of the middle part (12c) by means of which the shaft (12) is rotatably bearing-mounted in end bearings (13a, 13b), and
a shell (11) fitted around the middle part (12c) of the shaft (12) which shell rotates along the shaft (12), wherein the middle part (12c) of the shaft (12) comprises at least one pressure volume (61) to be pressurised by pressure medium, whereby the part of the outer surface of the middle part (12c) which is outside said at least one pressure volume (61) in the direction of the radius of the shaft (12) determines a peripheral joint surface (60) whereby, when pressurising said at least one pressure volume (61), the middle part (12c) expands from the area of the joint surface (60) in the direction of the radius of the shaft (12) to form a non-rotatable joint between the shaft (12) and the shell (11),
**characterized in that**
the middle part (12c) of the shaft (12) is crowned.

2. A roll according to claim 1, wherein the height of the pressure volume (61) in the direction of the radius of the shaft (12) is about 0.5-1 mm.

3. A roll according to claim 1 or 2, wherein the shaft (12) comprises a pressure control element (63) which is in a flow connection with the pressure volume (61).

4. A roll according to claim 3, wherein the pressure control element (63) is provided with a spring-like element (64) for minimising leaks.

5. A roll according to claim 4, wherein the shaft (12) comprises at least one pressure channel (62) which forms a flow connection between the pressure volume (61) and the pressure control element (63).

6. A roll according to any one of claims 1-5, wherein, the pressure volume (61) being in a non-pressurised state, the outer diameter of the middle part (12c) in the area of the joint area (60) is smaller than the inner diameter of the shell (11).

7. A roll according to any one of claims 1-6, wherein the shell (11) is sealed at its end surfaces to end surfaces (12d, 12e) of the middle part (12c) of the shaft (12) or to the surfaces of the end parts (12a, 12b) of the shaft (12).

8. A roll according to claim 7, wherein the shaft (12) comprises an oil channel arrangement (40, 41, 50, 51) by which oil operating as the lubrication and heat-transfer medium can be guided to a space between the middle part (12c) of the shaft (12) and the shell (11) and away from it.

9. A roll according to claim 8, wherein the roll is a thermo roll (120) for a calender.

10. A roll according to any one of claims 1-7, wherein the roll is a belt guide roll (130) for a belt calender.

11. A roll according to any one of claims 1-7, wherein the roll is a press roll, a sizer roll or a reeling drum.

12. A roll according to any one of claims 1-11, wherein the pressure medium is oil or water or grease or air or a combination of at least two above-mentioned pressure media.

## Patentansprüche

1. Walze mit
einer Welle (12), die aus einem zylindrischen Mittelteil (12c) und einem Endteil (12a, 12b) an jedem Ende des Mittelteils (12c) gebildet ist, mittels dem die Welle (12) in Endlagern (13a, 13b) drehbar per Lager montiert ist, und
einem Mantel (11), der um den Mittelteil (12c) der Welle (12) herum sitzt, wobei der Mantel sich zusammen mit der Welle (12) dreht, wobei der Mittelteil (12c) der Welle (12) zumindest ein Druckvolumen (61) aufweist, um durch das Druckvolumen mit Druck beaufschlagt zu werden, wobei der Teil der Außenfläche des Mittelteils (12c), der außerhalb des zumindest einen Druckvolumens (61) in der Richtung des Radius der Welle (12) ist, eine Umfangsverbindungsfläche (60) bestimmt, wobei, wenn das zumindest eine Druckvolumen (61) mit Druck beaufschlagt ist, der Mittelteil (12c) sich von dem Bereich der Verbindungsfläche (60) in der Richtung des Radius der Welle (12) erweitert, um eine nicht drehbare Verbindung zwischen der Welle (12) und dem Mantel (11) auszubilden,
**dadurch gekennzeichnet, dass**
der Mittelteil (12c) der Welle (12) eine Bombierung aufweist.

2. Walze gemäß Anspruch 1, wobei die Höhe des Druckvolumens (61) in der Richtung des Radius der Welle (12) ungefähr 0,5 bis 1 mm beträgt.

3. Walze gemäß Anspruch 1 oder 2, wobei die Welle (12) ein Drucksteuerelement (63) aufweist, das in einer Strömungsverbindung mit dem Druckvolumen (61) steht.

4. Walze gemäß Anspruch 3, wobei das Drucksteuerelement (63) mit einem federartigen Element (64) zum Minimieren von Leckagen versehen ist.

5. Walze gemäß Anspruch 4, wobei die Welle (12) zumindest einen Druckkanal (62) aufweist, der eine Strömungsverbindung zwischen dem Druckvolumen (61) und dem Drucksteuerelement (63) ausbildet.

6. Walze gemäß einem der Ansprüche 1 bis 5, wobei, wenn das Druckvolumen (61) in einem nicht mit Druck beaufschlagten Zustand ist, der Außendurchmesser des Mittelteils (12c) in dem Bereich des Verbindungsbereiches (60) geringer als der Innendurchmesser des Mantels (11) ist.

7. Walze gemäß einem der Ansprüche 1 bis 6, wobei der Mantel (11) an seinen Endflächen gegenüber den Endflächen (12d, 12e) des Mittelteils (12c) der Welle (12) oder gegenüber den Flächen der Endteile (12a, 12b) der Welle (12) abgedichtet ist.

8. Walze gemäß Anspruch 7, wobei die Welle (12) einen Ölkanalaufbau (40, 41, 50, 51) aufweist, durch den das Öl, das als ein Schmier- und Wärmeübertragungsmedium wirkt, zu einem Raum zwischen dem Mittelteil (12c) der Welle (12) und dem Mantel (11) geführt und von diesem weg geführt werden kann.

9. Walze gemäß Anspruch 8, wobei die Walze eine Thermowalze (120) für einen Kalander ist.

10. Walze gemäß einem der Ansprüche 1 bis 7, wobei die Walze eine Riemenführungswalze (130) für einen Riemenkalander ist.

11. Walze gemäß einem der Ansprüche 1 bis 7, wobei die Walze eine Druckwalze, eine Leimerwalze oder eine Aufrolltrommel ist.

12. Walze gemäß einem der Ansprüche 1 bis 11, wobei das Druckmedium Öl oder Wasser oder Fett oder Luft oder eine Kombination aus zumindest zwei der vorstehend erwähnten Druckmedien ist.

## Revendications

1. Rouleau comprenant :
un arbre (12), qui est formé d'une partie médiane cylindrique (12c) et d'une partie d'extrémité (12a, 12b) à chaque extrémité de la partie médiane (12c) au moyen desquelles l'arbre (12) est monté rotatif en appui sur des roulement d'extrémité (13a, 13b), et
une enveloppe (11) ajustée autour de la partie médiane (12c) de l'arbre (12) laquelle enveloppe tourne le long de l'arbre (12), où la partie médiane (12c) de l'arbre (12) comprend au moins un volume de pression (61) à mettre sous pression par un milieu de pression, moyennant quoi la partie de la surface externe de la partie médiane (12c) qui est à l'extérieur dudit au moins un volume de pression (61) dans la direction du rayon de l'arbre (12) détermine une surface de jonction périphérique (60) moyennant quoi, en mettant sous pression ledit au moins un volume de pression (61), la partie médiane (12c) s'étend de la zone de la surface de jonction (60) dans la direction du rayon de l'arbre (12) pour former une jonction non rotative entre l'arbre (12) et l'enveloppe (11),
**caractérisé en ce que**
la partie médiane (12c) de l'arbre (12) est bombée.

2. Rouleau selon la revendication 1, dans lequel la hauteur du volume de pression (61) dans la direction du rayon de l'arbre (12) est d'environ 0,5 à 1 mm.

3. Rouleau selon la revendication 1 ou 2, dans lequel l'arbre (12) comprend un élément (63) de régulation de pression qui est dans une liaison fluidique avec le volume de pression (61).

4. Rouleau selon la revendication 3, dans lequel l'élément (63) de régulation de pression est muni d'un élément (64) de type ressort pour minimiser les fuites.

5. Rouleau selon la revendication 4, dans lequel l'arbre (12) comprend au moins un canal de pression (62) qui forme une liaison fluidique entre le volume de pression (61) et l'élément (63) de régulation de pression.

6. Rouleau selon l'une quelconque des revendications 1 à 5, dans lequel, le volume de pression (61) étant dans un état non-pressurisé, le diamètre externe de la partie médiane (12c) dans la zone de la surface de jonction (60) est plus petit que le diamètre interne de l'enveloppe (11).

7. Rouleau selon l'une quelconque des revendications 1 à 6, dans lequel l'enveloppe (11) est scellée au niveau de ses surfaces d'extrémité à des surfaces d'extrémité (12d, 12e) de la partie médiane (12c) de l'arbre (12) ou au niveau des surfaces des parties d'extrémité (12a, 12b) de l'arbre (12).

8. Rouleau selon la revendication 7, dans lequel l'arbre (12) comprend un agencement (40, 41, 50, 51) de canaux d'huile par lequel l'huile faisant office de milieu de transfert de chaleur et de lubrification peut être guidée vers un espace entre la partie médiane (12c) de l'arbre (12) et l'enveloppe(11) et loin de celle-ci.

9. Rouleau selon la revendication 8, dans lequel le rouleau est un rouleau thermique (120) pour une calandre.

10. Rouleau selon l'une quelconque des revendications 1 à 7, dans lequel le rouleau est un rouleau (130) de guidage de courroie pour une calandre à courroie.

11. Rouleau selon l'une quelconque des revendication 1 à 7, dans lequel le rouleau est un rouleau de presse, un rouleau calibreur ou un tambour enrouleur.

12. Rouleau selon l'une quelconque des revendications 1 à 11, dans lequel le milieu de pression est de l'huile ou de l'eau ou de la graisse ou de l'air ou une combinaison d'au moins deux milieux de pression mentionnés ci-dessus.
